# EUROPEAN PATENT APPLICATION

(11) **EP 4 793 055 A1**
(43) Date of publication of application: **19.08.2026**
(21) Application number: 25215616.1
(22) Date of filing: 13.11.2025
(51) Int. Cl.: B41J 19/20

(54) **IMAGE FORMING SYSTEM, AND METHOD FOR IDENTIFYING ABNORMALITY IN IMAGE FORMING SYSTEM**

(30) Priority: 14.02.2025 JP 2025022486
(71) Applicant: Brother Kogyo Kabushiki Kaisha, Nagoya-shi, Aichi 467-8561 (JP)
(72) Inventor: OSHITANI, Yuta, Nagoya, 467-8562 (JP); FUKUCHI, Isao, Nagoya, 467-8562 (JP)
(74) Representative: J A Kemp LLP

(57) **Abstract**

In an image forming system, a controller is configured to input an operation amount for moving a carriage in a main scanning direction at a target velocity, to a motor driver based on a movement velocity of the carriage detected from an encoder signal. The motor driver is configured to apply a driving power based on the operation amount to a motor. The controller is configured to detect an abnormality in the movement velocity, a physical amount related to the movement velocity, or the operation amount, and to identify a cause of the abnormality based on an area, in a moving route of the carriage, in which the abnormality in the observed amount is detected, or based on a time period during which the abnormality in the observed amount is detected during movement of the carriage.

## Description

### TECHNICAL FIELD

The present invention relates to an image forming system and a method for identifying an abnormality in the image forming system.

### BACKGROUND ART

An image forming system in which a plurality of devices in the system are controlled based on a master signal is known (see, for example, Patent Literature 1). As a known technique related to this image forming system includes a technique of diagnosing a failure of each of the plurality of devices by performing, in real time, frequency analysis on a fluctuation amount of a rotation velocity calculated from comparison between the master signal and a feedback signal of each of the plurality of devices.

Further, an image forming system is known in which an image is formed on a medium such as paper or a garment by ejecting ink from a recording head. In this image forming system, various factors such as deterioration of a motor, soiling by the ink, and wearing of a movable part cause an operational abnormality. In a known technique, system maintenance such as replacement of a part and cleaning is performed so that the image forming system of this type can be continuously used.

### Citation list

[Patent Literature] Patent Literature 1: Japanese Patent Application Laid-open No. 2003-165201

### SUMMARY

### Problem to be solved by the invention:

As described above, the known technique uses the frequency analysis to identify a location at which an abnormality occurs. However, the cause of the abnormality includes a factor which cannot be detected by the frequency analysis. For example, in a system which forms an image on a medium using ink droplets, the ink droplets adhere to an encoder scale, in some cases. In such a situation, an abnormality occurs in the detection of the position and velocity of a carriage. The known technique which uses the frequency analysis cannot identify the cause with respect to such an abnormality. In an environment where identifying the cause takes time, the downtime of the system is prolonged.

In view of the above-described situation, according to an aspect of the present disclosure, a technique contributing to the identification of the cause of the abnormality which occurs in an image forming system configured to form an image by ejecting ink onto a medium is provided.

### Solution to the problem

According to an aspect of the present invention relates to an image forming system. The image forming system includes: a head, a carriage moving mechanism, a motor driver, an encoder, and a controller. The head is configured to eject ink onto the medium.

The carriage moving mechanism includes: a carriage having the recording head mounted on the carriage, a motor, and a power transmission device. The power transmission device converts rotational motion of the motor into translational motion of the carriage so as to move the carriage in a main scanning direction.

The motor driver drives the motor. The encoder outputs an encoder signal in accordance with a positional change in the main scanning direction of the carriage.

The controller performs movement control of the carriage. Specifically, the controller inputs, to the motor driver, an operating amount for moving the carriage at a target velocity in the main scanning direction, based on a moving velocity of the carriage detected from the encoder signal.

The motor driver applies a driving power based on the operating amount to the motor so as to drive the motor. The controller detects an abnormality in the moving velocity, a physical amount related to the moving velocity, or the operating amount, each of the moving velocity, the physical amount, and the operating amount being an observed amount observed by the movement control of the carriage, and to identify a cause of the abnormality based on an area, in a moving route of the carriage, in which the abnormality in the observed amount is detected, or based on a time period during which the abnormality in the observed amount is detected during movement of the carriage.

The image forming system contributes to appropriately identifying the cause of the abnormality occurring in the configuration in which the image is formed by ejecting the ink onto the medium.

According to another aspect of the present disclosure, a method for identifying a cause of an abnormality in an image forming system may be provided. The image forming system includes: a recording head, a carriage moving mechanism, a motor driver, an encoder, and a controller.

The recording head is configured to eject ink onto the medium. The carriage moving mechanism includes: a carriage having the recording head mounted on the carriage, a motor, and a power transmission device which converts rotational motion of the motor into translational motion of the carriage so as to move the carriage in a main scanning direction.

The motor driver is configured to drive the motor. The encoder is configured to output an encoder signal in accordance with a positional change in the main scanning direction of the carriage.

The controller is configured to perform movement control of the carriage by inputting, to the motor driver, an operating amount for moving the carriage at a target velocity in the main scanning direction, based on a moving velocity of the carriage detected from the encoder signal. The motor driver is configured to apply a driving power based on the operating amount to the motor so as to drive the motor.

The method for identifying the cause of the abnormality in the image forming system includes causing the controller to detect an abnormality in an observed amount observed by the movement control of the carriage, based on the moving velocity, a physical amount related to the moving velocity, or an operating amount, each of the moving velocity, the physical amount and the operation amount being the observed amount. The method for identifying the cause of the abnormality in the image forming system further includes causing the controller to identify the cause of the abnormality based on an area, in a moving route of the carriage, in which the abnormality in the observed amount is detected, or based on a time period during which the abnormality in the observed amount is detected during movement of the carriage.

According to the method for identifying the cause of the abnormality in the image forming system, the cause of the abnormality which occurs in the image forming system configured to form the image by ejecting the ink onto the medium can be appropriately identified.

According to yet another aspect of the present disclosure, a computer program causing a computer to execute the method for identifying the cause of the abnormality in the image forming system as described above may be provided. Further, a computer-readable medium storing the computer program may also be provided.

### BRIEF DESCRIPTION OF DRAWINGS

FIG. 1 is a diagram depicting the mechanical configuration of an image forming system.
FIG. 2 is a diagram depicting the electric configuration of the image forming system.
FIG. 3 is a flowchart indicating a job-related process executed by a main controller.
FIGs. 4A and 4B depict a flowchart indicating a maintenance-related process executed by the main controller.
FIG. 5 is a flowchart indicating a cause identifying process executed by the main controller.
FIG. 6 is a graph of time versus index value indicating changes in an index value.
FIG. 7A and FIG. 7B are graphs each describing a change in velocity or a change in a voltage command value for each cause of the abnormality.
FIG. 8A is a graph describing a change in a peak observed value versus time in a case where a peak observed value changes slowly, and FIG. 8B is a graph describing the change in the peak observed value versus time in a case where the peak observed value changes abruptly.
FIG. 9 is a diagram describing the determination of remaining service life and the identification of the cause of the abnormality using a server apparatus.
FIG. 10 is a diagram describing a method for identifying the cause of the abnormality in accordance with a modification.

### DESCRIPTION OF THE EMBODIMENT

In the following, an embodiment of the present disclosure will be described, with reference to the drawings.

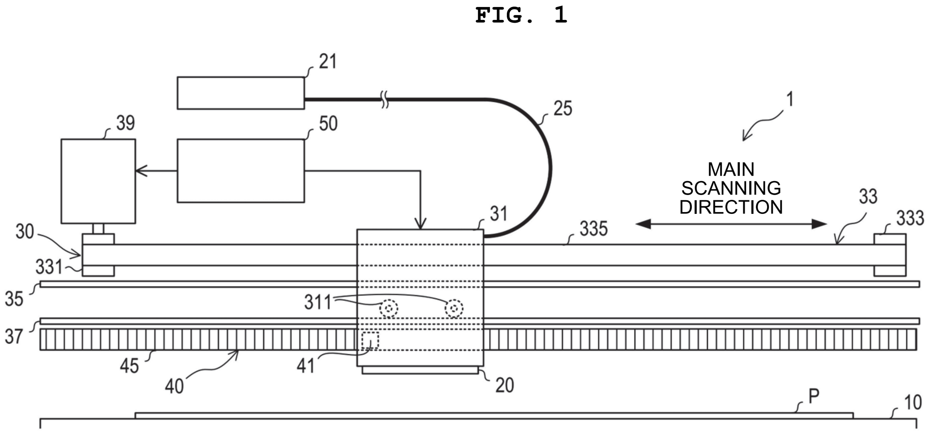

An image forming system 1 of the present embodiment depicted in FIG. 1 is an ink-jet printer which forms an image on an object P, as a medium placed on a platen 10, by ejecting ink onto the object P. Specifically, the object P is a garment. In other words, the image forming system 1 is a garment printer.

The image forming system 1 includes the platen 10, a recording head 20, an ink tank 21, an ink supply tube (hereinafter simply referred to as "tube") 25, a carriage moving mechanism 30, a linear encoder 40, and a controller 50.

The recording head 20 is an ink-jet head and ejects ink onto the object P which is placed to face the recording head 20. The recording head 20 has a plurality of nozzle arrays each including nozzles from which ink droplets are ejected. The recording head 20 is connected to the ink tank 21 via the tube 25. The ink tank 21 supplies the ink to the recording head 20 via the tube 25.

The carriage moving mechanism 30 includes a carriage 31, a belt mechanism 33, a shaft 35, a guide rail 37, and a carriage (CR) motor 39. The belt mechanism 33, the shaft 35, and the guide rail 37 correspond to a power transmission device.

The carriage 31 has the recording head 20 mounted on the carriage 31. The carriage 31 reciprocates in a main scanning direction by the power received from the CR motor 39 which is controlled by the controller 50. In conjunction with the movement of the carriage 31, the recording head 20 moves in the main scanning direction.

The ink tank 21 is not mounted on the carriage 31. Rather, the ink tank 21 is retained inside the image forming system 1. Therefore, the tube 25 maintains the connection between the recording head 20 and the ink tank 21, while deforming in accordance with a change in the relative position of the recording head 20 with respect to the ink tank 21 as the carriage 31 moves.

The belt mechanism 33 is disposed along the main scanning direction. The belt mechanism 33 includes a driving pulley 331, a driven pulley 333, and an endless belt 335. The belt mechanism 33 utilizes the shaft 35 and the guide rail 37 each of which restricts the movement of the carriage 31, and converts the rotational motion of the CR motor 39 into the translational motion of the carriage 31, thereby causing the carriage 31 to move in the main scanning direction.

The endless belt 335 is disposed along the main scanning direction and is wound between the driving pulley 331 and the driven pulley 333. The shaft 35 and the guide rail 37 are disposed in parallel along the main scanning direction so as to form a moving route of the carriage 31. The driving pulley 331 is disposed at one end in the main scanning direction of the moving route, and the driving pulley 333 is disposed at the other end in the main scanning direction of the moving route.

The CR motor 39 is connected to the driving pulley 331. The CR motor 39 is, for example, a DC motor. The driving pulley 331 rotates in conjunction with the rotation of the CR motor 39. The endless belt 335 and the driven pulley 333 rotate in conjunction with the rotation of the driving pulley 331.

The carriage 31 is held by the endless belt 335 and moves translationally in conjunction with the rotation of the endless belt 335. In other words, the carriage 31 receives the power from the CR motor 39 via the endless belt 335 and moves translationally.

The carriage 31 is connected to the shaft 35 and the guide rail 37 extending in the main scanning direction. The shaft 35 and the guide rail 37 are spaced apart on a plane parallel to the platen 10 and in a sub-scanning direction orthogonal to the main scanning direction. That is, the shaft 35 and the guide rail 37 are disposed so as to support the both sides of the carriage 31 in the sub-scanning direction.

The shaft 35 is disposed so as to pass through the carriage 31 and restricts the movement of the carriage 31 to the main scanning direction. With this, the carriage 31 is disposed to be reciprocally movable along the shaft 35 in the main scanning direction. The guide rail 37 makes contact with the carriage 31 on the side opposite to the shaft 35 in the sub-scanning direction, and restricts the movement of the carriage 31 to the main scanning direction. The carriage 31 has rollers 311 which run on the guide rail 37 and which are disposed rotatably in the carriage 31.

In a case where the carriage 31 moves translationally in conjunction with the rotation of the endless belt 335, the rollers 311 run on the guide rail 37 due to rolling movement of the rollers 311 in a state that the rollers 311 make contact with the guide rail 37. The carriage 31 moves along the main scanning direction under the action of the force from the endless belt 335 in a state that the movement of the carriage 31 is restricted by the shaft 35 and the guide rail 37.

The carriage 31 moves in the positive or negative direction of the main scanning direction in accordance with the rotational direction of the endless belt 335. In other words, the carriage 31 reciprocates in the main scanning direction in accordance with the switching of the rotational direction of the endless belt 335.

The linear encoder 40 includes an optical sensor 41 and an encoder scale 45, and functions as an incremental optical linear encoder. The linear encoder 40 is used to observe the position and a moving velocity (hereafter simply referred to as "velocity") in the main scanning direction of the carriage 31.

As depicted in FIG. 1, the encoder scale 45 is disposed to extend in the main scanning direction, along the moving route of the carriage 31. The encoder scale 45 includes scales positioned with predetermined spacing in the longitudinal direction, of the encoder scale 45, corresponding to the main scanning direction.

The optical sensor 41 is attached to the carriage 31 and moves together with the carriage 31 in the main scanning direction. Namely, the optical sensor 41 moves relative to the encoder scale 45. In a case where the carriage 31 moves in the main scanning direction, the optical sensor 41 reads the scales of the encoder scale 45 and outputs an encoder signal in accordance with a positional change in the main scanning direction of the carriage 31.

Specifically, the optical sensor 41 outputs a pulse signal as the encoder signal each time the carriage 31 moves by a predetermined amount in the main scanning direction. The encoder signal includes, for example, an A-phase signal and a B-phase signal of which phases are shifted by 90 degrees from each other.

Based on the position and the moving velocity of the carriage 31 in the main scanning direction detected based on the encoder signal, the controller 50 controls the movement of the carriage 31 and an ejecting operation of ink by the recording head 2.

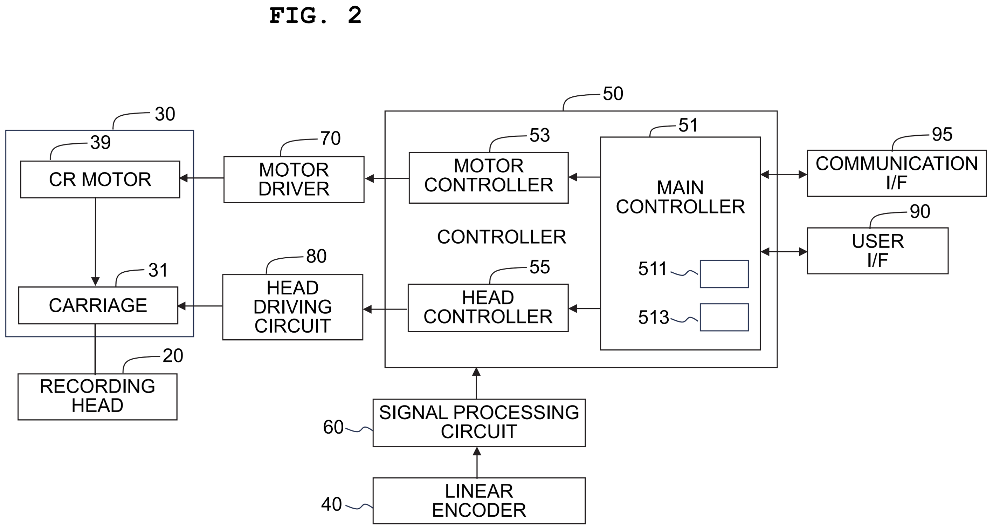

As depicted in FIG. 2, the image forming system 1 includes a signal processing circuit 60, a motor driver 70, a head driving circuit 80, a user interface 90, and a communication interface 95 each of which is disposed around the controller 50.

The signal processing circuit 60 detects the position and the moving velocity of the carriage 31 in the main scanning direction, based on the encoder signal input from the linear encoder 40. In the following, the position and a velocity V of the carriage 31 detected by the signal processing circuit 60 are also expressed as a detected position and a detected velocity V.

The motor driver 70 drives, based on a voltage command value U input from the controller 50, the CR motor 39 by applying a driving power which corresponds to the voltage command value U to the CR motor 39. The head driving circuit 80 drives the recording head 20 based on a command signal from the controller 50 to cause the recording head 20 to execute the ejecting operation of the ink.

The user interface 90 has an operation part (not depicted in the drawings) for receiving an operation from a user and a display (not depicted in the drawings) for displaying various kinds of information to the user. The operation part may be, for example, a touch panel disposed on a display screen of the display. The display may be, for example, a liquid crystal display.

The communication interface 95 is configured to communicate with an external device. The image forming system 1 obtains image data from the external device via the communication interface 95, and forms an image based on the obtained image data on the object P.

The controller 50 has a main controller 51, a motor controller 53, and a head controller 55, as depicted in FIG. 2. The motor controller 53 controls the CR motor 39 to thereby control the position and the velocity of the carriage 31 in the main scanning direction.

For example, the motor controller 53 performs motor control to move the carriage 31 constantly at a target velocity Vr in the main scanning direction in a case where an image is (being) formed on the object P. This motor control is performed to control a landing position of the ink on the object P.

Specifically, the motor controller 53 performs feedback control to make the velocity of the carriage 31 the target velocity Vr, based on the detected velocity V of the carriage 31 obtained from the signal processing circuit 60. The feedback control may be, for example, the PID control.

The motor controller 53 calculates, for example, the voltage command value U in accordance with a deviation E = Vr-V between the detected velocity V of the carriage 31 and the target velocity Vr, and inputs the voltage command value U to the motor driver 70 to thereby execute the movement control of the carriage 31. The voltage command value U corresponds to an operating amount U with respect to the CR motor 39 so as to move the carriage 31 in the main scanning direction at the target velocity Vr.

The motor driver 70 applies, to the CR motor 39, a driving current (in other words, driving power) corresponding to the voltage command value U input from the motor controller 53 by, for example, the PWM (Pulse Width Modulation) driving, thereby driving the CR motor 39. Accordingly, the velocity of the carriage 31 is controlled to the target velocity Vr. The voltage command value U corresponds to a PWM value.

The head controller 55 inputs a control signal for controlling the ejecting operation of the ink executed by the recording head 20 to the head driving circuit 80, based on the detected position of the carriage 31 obtained via the signal processing circuit 60.

The main controller 51 receives a command from the user input via the user interface 90. Further, the main controller 51 monitors the state of the image forming system 1, and displays information describing the state of the image forming system 1 to the user via the user interface 90 as appropriate.

According to the present embodiment, the main controller 51 determines remaining service life which is a remaining time before the image forming system 1 might fail. The main controller 51 further provides, to the user via the user interface 90, information urging the user to perform maintenance such as exchange of part(s) or component(s), cleaning, etc., as maintenance-related information, based on the remaining service life and before the image forming system 1 might fail.

Prior to providing the above-described information, the main controller 51 identifies the cause of an abnormality, and provides the user with information on an object part of the maintenance as the maintenance-related information.

The main controller 51 records, for each time a print job is performed, the maximum value of the velocity V of the carriage 31 or the maximum value of the voltage command value U, as an observed amount related to the movement control of the carriage 31, and the main controller 51 predicts a timing at which the maximum value reaches a threshold value, based on a temporal change in the maximum value. The main controller 51 determines the predicted timing as the service life of the image forming system 1 and determines a time from the current time to the predicted timing as the remaining service life.

The main controller 51 identifies the cause of the abnormality in a case where the remaining service life becomes less than a set value, informs the user of the remaining service life via the user interface 90, and urges the user to perform maintenance of a part, of the image forming system 1, corresponding to the cause of the abnormality. In the following, the details of a process relating to the determination of the remaining service life and the identification of the cause of the abnormality will be described.

As depicted in FIG. 2, the main controller 51 includes a processor 511 and a memory 513. The processor 511 executes various functions, including the determination of the remaining service life, by executing a process in accordance with a computer program stored in the memory 513. The memory 513 may include a RAM and a NVRAM.

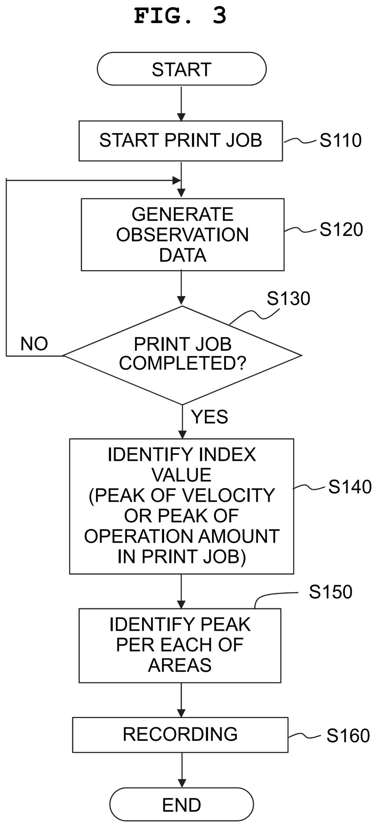

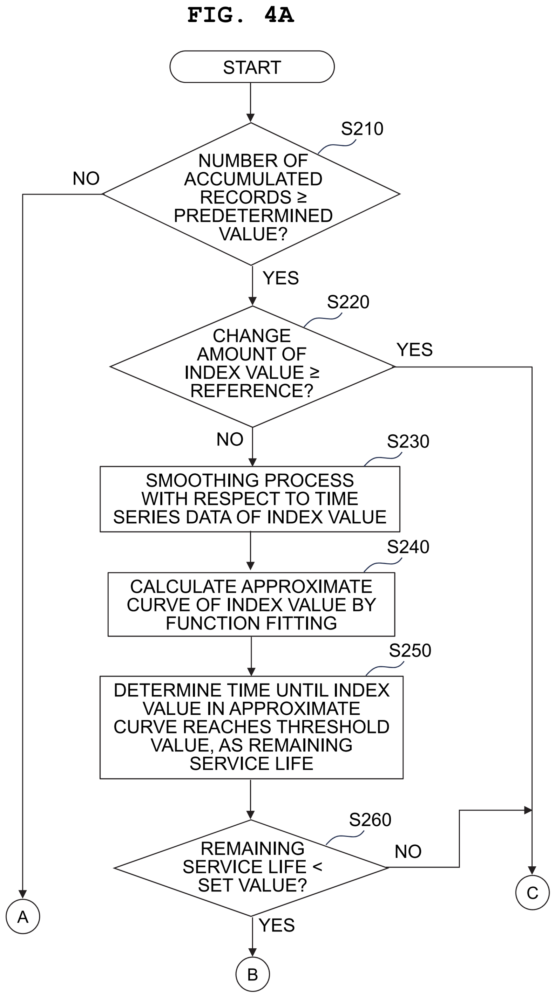

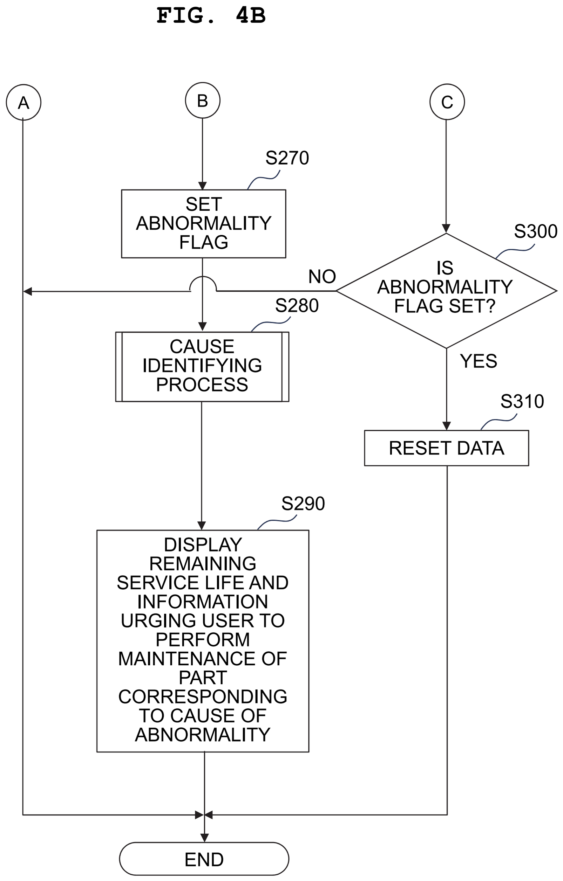

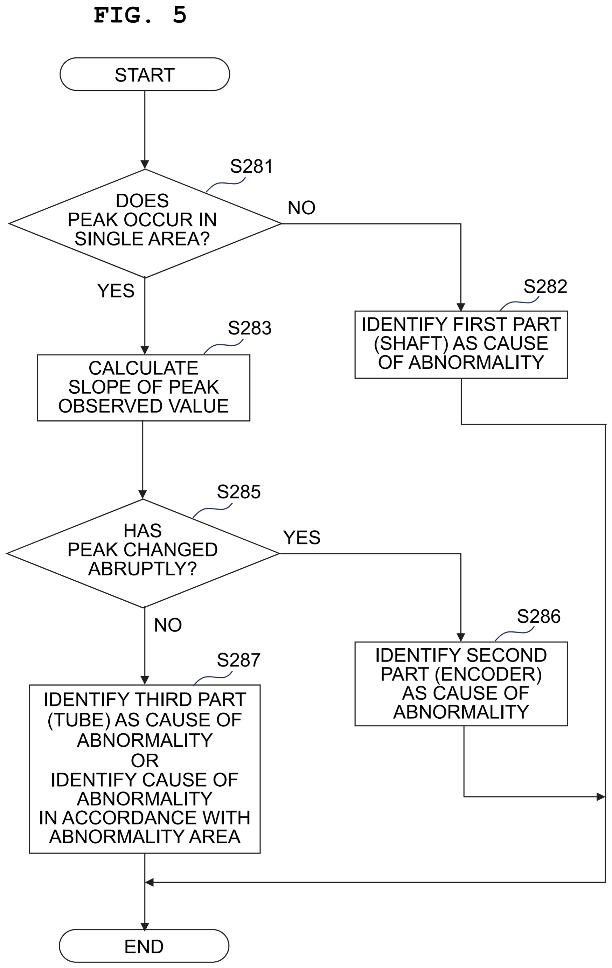

A job-related process (FIG. 3), a maintenance-related process (FIGs. 4A and 4B), and a cause identifying process (FIG. 5) executed by the main controller 51 described below are, respectively, processes which the processor 511 executes in accordance with the computer program stored in the memory 513.

The main controller 51 executes the job-related process depicted in FIG. 3 in a case where a start condition of the print job is satisfied. For example, the main controller 51 executes the job-related process in a case where an execution command for the print job is input via the user interface 90.

In a case where the main controller 51 starts the job-related process, the main controller 51 starts the print job (step S110). In the print job, the main controller 51 cooperates with the motor controller 53 and the head controller 55 so as to control the movement of the carriage 31 and the ink ejecting operation by the recording head 20, and forms an image based on specified image data on the object P.

In the print job, the motor controller 53 controls the CR motor 39 to cause the carriage 31 to reciprocate in the main scanning direction. The motor controller 53 calculates the voltage command value U so that the carriage 31 moves constantly at the target velocity Vr in a region which is located between an acceleration region and a deceleration region in the moving route of the carriage 31, and in which the ink ejecting operation is performed.

Specifically, the motor controller 53 calculates the voltage command value U as calculated values of the voltage command value U sequentially in accordance with the deviation E = Vr-V between the target velocity Vr of the carriage 31 and the detected velocity V of the carriage 31. The motor controller 53 sequentially inputs the calculated values of the voltage command value U to the motor driver 70 to thereby cause the motor driver 70 to drive the CR motor 39 based on the calculated values of the voltage command value U. With this, the movement control of the carriage 31 is realized and the velocity of the carriage 31 is controlled to the target velocity Vr.

The main controller 51 generates observation data by sequentially recording the velocity V of the carriage 31 and/or the voltage command value U (that is, the velocity V of the carriage 31 the voltage command value U or both of the velocity V of the carriage 31 and the voltage command value U) in the memory 513. The velocity V of the carriage 31 is detected using the linear encoder 40 during a constant velocity period as a period in which the velocity of the carriage 31 is controlled to the target velocity Vr. The voltage command value U is the operating amount U input to the motor driver 70.

The observation data is time series data as data constructed of time-series values of the observed velocity V of the carriage 31 and/or the observed voltage command value U. This observation data may have information with which the position in the main scanning direction of the carriage 31, at a time when each of the observed values of the velocity V and/or each of the observed values of the voltage command value U are (is) observed, can be identified.

In a case where the print job is completed (step S130: YES), the main controller 51 identifies the peak of the velocity V or the peak of the voltage command value U in the constant velocity period indicated by the observation data, as an index value Z to be used for the determination of the remaining service life (step S140). The index value Z corresponds to a health index of the image forming system 1.

In step S140, the main controller 51 can identify the maximum value of the velocity V in the constant velocity period in the print job, as the index value Z. Alternatively, the main controller 51 can identify the maximum value of the voltage command value U in the constant velocity period as the index value Z.

With respect to a plurality of areas in the moving route of the carriage 31, the main controller 51 further analyzes the velocity V or the voltage command value U in the constant velocity period indicated by the observation data, and identifies the peak of the velocity V or the peak of the voltage command value U in the moving route of the carriage 31, in each of the plurality of areas. In the following, the peak of the velocity V or the peak of the voltage command value U identified here is expressed as a peak observed value Y.

The designer of the image forming system 1 can determine which one of the velocity V and the voltage command value U is to be used as the peak observed value Y. In a case where the velocity V is applied as the index value Z, the velocity V can be applied as the peak observed value Y. In a case where the voltage command value U is applied as the index value Z, the voltage command value U can be applied as the peak observed value Y.

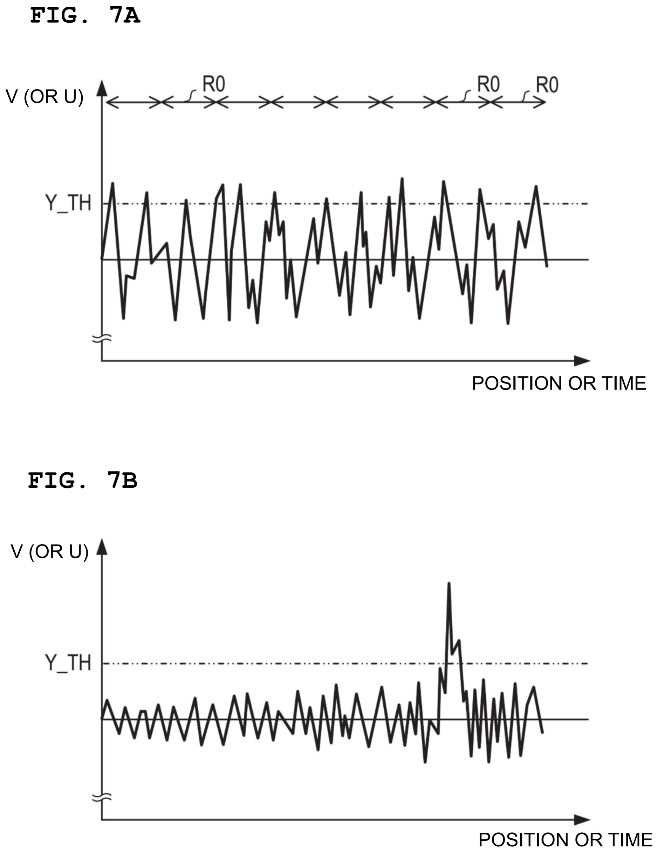

Each of the above-described plurality of areas corresponds to a partial region R0 in the moving route in a case where the moving route of the carriage 31 is regarded as a one-dimensional space parallel to the main scanning direction (see FIG. 7A). The plurality of areas may be defined as areas disposed side by side continuously or discretely in the main scanning direction. A plurality of regions R0, which are included in the moving route and in which an abnormal peak might occur in the velocity V or the voltage command value U, is defined as the plurality of areas.

In the print job, the carriage 31 repeatedly reciprocates in the main scanning direction. In step S150, the main controller 51 is capable of identifying, in each of the plurality of areas, the maximum value of the velocity V observed in the print job as the peak observed value Y. Alternatively, the main controller 51 is capable of identifying the maximum value of the voltage command value U observed in the print job in each of the plurality of areas as the peak observed value Y.

Subsequently, in step S160, the main controller 51 records the index value Z and the peak observed value Y of each of the plurality of areas in a memory table. After that, the main controller 51 ends the job-related process.

The main controller 51 additionally records the index value Z and the peak observed value Y of each of the plurality of areas in step S160 each time the main controller 51 executes the print job, thereby storing, in the table, time series data as data constructed of time-series values of the index value Z and time series data as data constructed of time-series values of the peak observed value Y, in each of the plurality of areas. The main controller 51 records, in the table, information on the date and time of the recording, together with the index value Z and the peak observed value Y in each of the plurality of areas.

Each time the main controller 51 executes the job-related process, the main controller 51 executes the maintenance-related process depicted in FIGs. 4A and 4B, following the job-related process. In the maintenance-related process, the remaining service life of the image forming system 1 is determined based on the changes in the index value Z indicated by the table (step S250); in a case where the remaining service life is short, the main controller 51 notifies the user of the remaining service life and the need for the maintenance (step S290).

In a case where the main controller 51 starts the maintenance-related process, the main controller 51 determines whether records of which number is a predetermined value or more have been accumulated in the table (step S210). Here, each of the records of which number is the predetermined value or more is the record of the index value Z. In a case where the main controller 51 executes the job-related process a predetermined number of times or more, and the index values Z of which number is the predetermined value or more are thereby accumulated in the table, the main controller 51 makes a positive determination in step S210, and executes a process of step S220. On the other hand, in a case where the index values Z of which number is less than the predetermined value are accumulated in the table (in step S210: NO), the main controller 51 regards the information as insufficient and ends the maintenance-related process.

In step S220, the main controller 51 determines whether the change amount of the index value is a reference or more. Specifically, the main controller 51 determines whether the latest value of the index value Z is lower than a previous value of the index value Z by the reference or more. In a case where the main controller 51 determines that the latest value of the index value Z is lower than the previous value by the reference or more (step S220: YES), the main controller 51 executes a process of step S300. The index value Z improves rapidly in a case where the maintenance is executed. The determination in step S220 is performed to detect whether the index value Z is improved owing to the maintenance.

In a case where the main controller 51 determines that the change amount of the index value is less than the reference in step 220 (step S220: NO), the main controller 31 executes a process of step S230. In step S230, the main controller 51 executes a smoothing process with respect to the time series data of the index value Z registered in the table, thereby generating the smoothed time series data of the index value Z. The smoothing process may specifically be obtaining a moving average. By obtaining the moving average, the time series data of the index value Z is smoothed in the time direction.

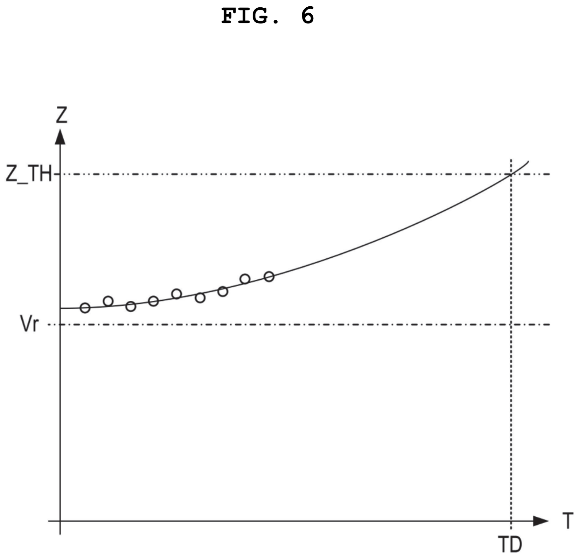

The main controller 51 then calculates an approximate curve of the index value Z by function fitting using a predetermined function with respect to the smoothed time series data of the index value Z (step S240). The graph indicated in FIG. 6 is a graph plotting the index value Z for each print job, based on the smoothed time series data of the index value Z. The graph has a horizontal axis which is time T, and a vertical axis which is the index value Z.

The time T in the graph may be understood as the number of times the print job has been executed. White dots in FIG. 6 correspond to plot points of the index value Z. In a case where each index value Z corresponds to the maximum value of the velocity V in each print job, a group of the plot points represents a temporal change in the maximum value of the velocity V.

FIG. 6 describes an example in which an approximate curve of an exponential function corresponding to a group of the plot points is calculated by the function fitting using the exponential function. In FIG. 6, the approximate curve is represented by a solid line. The function fitting is performed, for example, so as to find an approximate curve in which the residual sum of squares (RSS) from the plot points is minimum.

Subsequently, in step S250, the main controller 51 determines the remaining time until a time TD, when the index value Z in the approximate curve reaches a threshold value Z_TH, as the remaining service life. That is, the main controller 51 determines a time from the current time to the future time TD (e.g., the number of times the print job is to be executed) as the remaining service life.

For example, a time from a latest plot point (a plot point located at the end of the time direction) to the time TD in FIG. 6 corresponds to the remaining service life. The threshold value Z_TH corresponds to a value wherein the main controller 51 presumes the image forming system 1 to fail in a case where the index value Z exceeds the threshold value Z_TH. The threshold value Z_TH is set in advance through, for example, an operation test of the image forming system 1.

In a case where the index value Z corresponds to the maximum value of the velocity V of the carriage 31 in the print job, the threshold value Z_TH may correspond to the maximum value of the velocity V at which a normal velocity control can be performed. In a case where the index value Z corresponds to the maximum value of the voltage command value U in the print job, the threshold value Z_TH may be a voltage command value corresponding to the maximum value of the driving current which can be applied to the CR motor 39.

For example, in a case where the encoder scale 45 is dirtied by any stain adhered to the encoder scale 45 and the optical sensor 41 cannot read the scales properly, the velocity V is likely to deviate from the target velocity Vr, and as the dirtiness in the encoder scale 45 spreads, the index value Z corresponding to the maximum value of the velocity V might reach the threshold value Z_TH. For example, in a case where a reaction force acting on the carriage 31 increases due to the malfunction of the carriage moving mechanism 30 caused by mechanical wear, the index value Z corresponding to the maximum value of the voltage command value U might reach the threshold value Z_TH.

Subsequently, in step S260, the main controller 51 determines whether the remaining service life is less than the set value. The set value is defined so that the information urging (the user) to perform the maintenance can be output at an appropriate timing before the image forming system 1 reaches the end of the service life.

In a case where the main controller 51 determines that the remaining service life is less than the set value (step S260: YES), the main controller 51 sets an abnormality flag (step S270). In a case where the remaining service life is less than the set value, the velocity V of the carriage 31 or the voltage command value U, each as the observed amount related to the movement control of the carriage 31, is in a state of being deviated from the normal value. The main controller 51 detects the abnormality in the observed amount with respect to the movement control of the carriage 31 by comparing the remaining service life with the set value in step S260.

Subsequently, in step S280, the main controller 51 identifies an area, among the plurality of areas in the moving route of the carriage 31, in which the abnormality in the observed amount is detected, based on the time series data of the peak observed value Y in each of the plurality of areas recorded in the table by the process of step S150 (see FIG. 3), thereby identifying the cause of the abnormality. In such a manner, the main controller 51 identifies a part in which the image forming system 1 is to reach the end of the service life (step S280).

Specifically, in step S280, the main controller 51 executes the cause identifying process indicated in FIG. 5. In a case where the main controller 51 starts the cause identifying process, the main controller 51 refers to the peak observed value Y recorded in the table, and the main controller 51 determines whether the peak exceeding the threshold value Y_TH occurs only in a single area among the plurality of areas (step S281). Here, an area in which the peak exceeding threshold value Y_TH occurs is identified as an area in which the abnormality in the observed amount is detected.

With respect to plurality of areas, the main controller 51 is capable of referring to the peak observed values Y each of which has been observed in a corresponding one of the plurality of print jobs executed in a predetermined period in the past so as to determine, in each area of the plurality of areas, whether the peak observed value Y has exceeded the threshold value Y_TH at least once. According to another example of the present embodiment, the main controller 51 is capable of referring to the latest peak observed value Y recorded in the table so as to determine whether the latest peak observed value Y exceeds a threshold value Y_TH which may be previously determined.

The threshold value Y_TH may be defined as one threshold value common to the plurality of areas, or the threshold value Y_TH may be defined individually for each area of the plurality of areas. The threshold value Y_TH may be defined as a value smaller than the threshold value Z_TH of the index value Z, based on the threshold value Z_TH of the index value Z and the remaining service life. For example, the threshold value Y_TH may be determined, with the value of index value Z in a case where the main controller 51 makes a positive determination in step S260 as a reference, within a range which is the above-described value of the index value Z or less.

In a case where a peak observed value Y, which is a great value exceeding the threshold value Y_TH, is observed in two or more areas, the main controller 51 makes a negative determination in step S281. In a case where the main controller 51 makes the negative determination in step S281 (step S281: NO), the main controller 51 executes a process of step S282.

For example, as indicated in FIG. 7A, in a case where the peak observed value Y fluctuates significantly and entirely during the movement of the carriage 31 (specifically, entirely during the control under constant velocity) and the number of the area in which the peak observed value Y exceeds the threshold value Y_TH is plural, the main controller 51 makes the negative determination in step S281.

FIG. 7A and FIG. 7B are graphs indicating the change in the velocity V or the change in the voltage command value U during the movement of the carriage 31, with the horizontal axis representing the position of the carriage 31 and the vertical axis representing the velocity V or the voltage command value U corresponding to the peak observed value Y.

In step S282, the main controller 51 identifies a first part as the cause of the abnormality. The first part is a part which generates the cause of the abnormality in the velocity V or the voltage command value U occurring over a wide range of the moving route of the carriage 31 in the main scanning direction.

According to the present embodiment, the main controller 51 identifies the shaft 35 as the cause of the abnormality, in step S282. With this, the main controller 51 identifies the cause of the abnormality. In the image forming system 1, which forms an image by ejecting the ink onto the object P, as the adhesion of ink mist to the shaft 35 accumulates, the velocity V of the carriage 31 increases.

Since the ink mist adheres to the entirety of the shaft 35, the increase in the velocity V is not limited to a single area, but occurs in two or more areas. For this reason, in step S282, the main controller 51 identifies the shaft 35 as the cause of the abnormality. After determining the cause of the abnormality in step 282, the main controller 51 ends the cause identifying process.

In a case where the peak observed value Y exceeding the threshold value Y_TH is observed only in a single area, the main controller 51 makes a positive determination in step S281. In a case where the main controller 51 makes the positive determination in step S281 (step S281: YES), the main controller 51 executes a process of step S283.

For example, as indicated in FIG. 7B, in a case where the velocity V or the voltage command value U changes significantly in a single area during the movement of the carriage 31, and the peak observed value Y exceeding the threshold value Y_TH is observed, the main controller 51 makes a positive determination in step S281 and executes the process of step S283.

In step S283, the main controller 51 calculates the slope of the peak observed value Y in a single area in which the peak exceeding the threshold value Y_TH occurs (hereinafter referred to as an "abnormal area"). For example, the main controller 51 is capable of obtaining, from the table, the peak observed value Y of the abnormal area in the print job performed a plurality of times (a plurality of print jobs) in a predetermined period in the past of which end point is the present time, as time series data of the latest peak observed value Y.

Based on the obtained time series data, the main controller 51 is capable of calculating, as the slope, the average or the maximum value of change amounts per unit time of the peak observed value Y in the predetermined period in the past. The change amount per unit time may be the difference of the peak observed values Y between the plurality of print jobs. That is, the change amount per unit time may be the difference between the peak observed value Y of the abnormal area observed in a certain print job and the peak observed value Y of the abnormal area observed in another print job performed immediately before the certain print job.

Subsequently, in step S285, the main controller 51 determines whether the peak has changed abruptly, based on the calculated slope. In a case where the slope calculated in step S283 is a reference value or more, the main controller 51 can determine that the peak has changed abruptly. On the other hand, in a case where the slope is less than the reference value, the main controller 51 can determine that the peak has not changed abruptly.

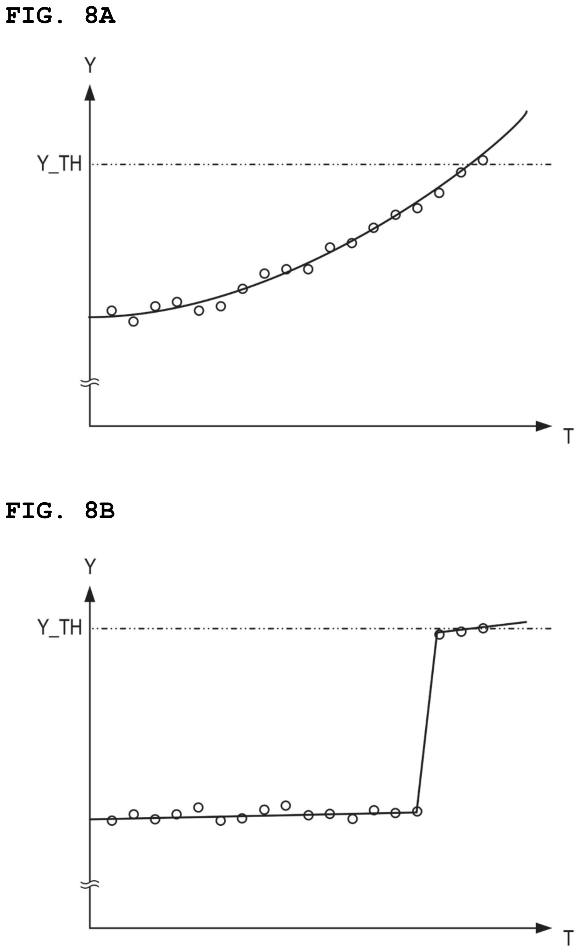

According to the example indicated in FIG. 8A, the peak observed value Y changes slowly. On the other hand, according to the example indicated in FIG. 8B, the peak observed value Y is changing abruptly. For example, in a case where the peak observed value Y is changing abruptly (in other words, discontinuously) as indicated in FIG. 8B, the main controller 51 can make a positive determination in step S285; on the other hand, for example, in a case where the peak observed value Y is changing slowly (in other words, continuously) as indicated in FIG. 8A, the main controller 51 can make a negative determination in step S285.

In a case where the main controller 51 makes a positive determination in step S285 (step S285: YES), the main controller 51 identifies a second part as the cause of the abnormality (step S286). The second part is a part which generates a cause of the abnormality in the velocity V or the voltage command value U occurring abruptly, rather than slowly.

According to the present embodiment, the main controller 51 identifies the linear encoder 40 as the cause of the abnormality in step S286. With this, the main controller 51 identifies the cause of the abnormality.

In the image forming system 1 which ejects the ink onto the object P to form an image, in a case where the ink adheres to the encoder scale 45, the normal reading of the scales by the optical sensor 41 is thereby interfered with, resulting in the abnormality in the velocity V or the voltage command value U suddenly observed from a certain time, as indicated in the example of FIG. 7B. Once the abnormality occurs due to the ink stain, the peak observed value Y exceeding the threshold value Y_TH is continuously observed in an area corresponding to the ink stain, as depicted in FIG. 8B, and a position at which the peak occurs does not move. Basically, the peak observed value Y exceeding the threshold value Y_TH is observed in the single area.

For the above-described reason, in step S286, the main controller 51 identifies the linear encoder 40 as the cause of the abnormality. After identifying the cause of the abnormality in step S286, the main controller 51 ends the cause identifying process.

In a case where the main controller 51 makes a negative determination in step S285, the main controller 51 identifies a third part as the cause of the abnormality (step S287). The third part is a part which generates the cause of the abnormality in the velocity V or the voltage command value U occurring slowly. The third part is a part generating the cause of the abnormality in the velocity V or the voltage command value U occurring only in a specified area which is one area and not a random area in the moving route of the carriage 31.

According to the present embodiment, the main controller 51 identifies the tube 25 as the cause of the abnormality in step S287. With this, the main controller 51 identifies the cause of the abnormality.

In the image forming system 1 which forms the image by ejecting the ink onto the object P, as the adhesion of ink mist to the tube 25 accumulates, the abnormality in the velocity V or the voltage command value U is observed in an area, in the moving route of the carriage 31, in which the reaction force of the tube 25 acting on the carriage 31 is the greatest. This abnormality in the velocity V or the voltage command value U is observed, for example as indicated in FIG. 7B, in a specified area uniquely determined by the mechanical configuration of the image forming system 1. This abnormality gradually appears due to the gradual change in the velocity V or in the voltage command value U.

For this reason, in step S287, the main controller 51 identifies the tube 25 as the cause of the abnormality. As an another example, in a case where the part generating the cause of the abnormality in the velocity V or the voltage command value U occurring slowly is present as a plurality of parts, the main controller 51 can identify a part, among the above-described plurality of parts, which corresponds to the abnormal area as the cause of the abnormality. After identifying the cause of the abnormality in step S287, the main controller 51 ends the cause identifying process.

The main controller 51 executes the processes from step S283 to step S287 to thereby identify the cause of the abnormality based on the temporal change in the observed amount observed by the movement control performed a plurality of times until the abnormality in the observed amount is detected. According to the present embodiment, the temporal change in the observed amount is evaluated by the above-described slope. According to the present embodiment, whether the temporal change in the observed amount is abrupt or not is evaluated by whether the temporal change in the observed amount is the reference or more, particularly whether the slope is the reference value or more.

After ending the cause identifying process (step S280), the main controller 51 executes a process of step S290. In step S290, the main controller 51 displays, to the user via the user interface 90, the remaining service life determined in step S250, and also displays, to the user through the user interface 90, information urging the user to perform the maintenance of the part corresponding to the cause of the abnormality identified in step S280. After that, the main controller 51 ends the maintenance-related process depicted in FIG. 4B.

By executing the maintenance-related process, the main controller 51 urges the user to execute the maintenance at an appropriate timing before the service life of each of the parts of the image forming system 1 comes to an end and results in the failure of the image forming system 1.

In step S290, the main controller 51 is capable of outputting an alert sound via the user interface 90, thereby strongly urging the user to perform the maintenance. The user interface 90 may include a speaker (not depicted in the drawings) capable of outputting the alert sound.

On the other hand, in a case where the main controller 51 determines that the change amount of the index value is the reference or more in step S220 (step S220: YES) or that the remaining service life is the setting value or more in step S260 (step S260: NO), the main controller 51 execute the process of step S300. As another example, in a case where the main controller 51 makes a negative determination in step S260, the main controller 51 may end the maintenance-related process, without executing the process of step S300 and the process of step S310. Alternatively, the main controller 51 may end the maintenance-related process, without executing the process of step S300 and the process of step S310 for a predetermined period after the abnormality flag is set.

In step S300, the main controller 51 determines whether the abnormality flag is set. The abnormality flag is reset in the initial state and is set in the process of step S270. In a case where the main controller 51 determines that the abnormality flag is not set (step S300: NO), the main controller 51 ends the maintenance-related process.

On the other hand, in a case where the main controller 51 determines that the abnormality flag is set (step S300: YES), the main controller 51 considers that the maintenance is completed and resets related data while resetting the abnormality flag (step S310). For example, the main controller 51 resets the table storing the time series data of the index value Z. After that, the main controller 51 ends the maintenance-related process.

According to the image forming system 1 of the present embodiment described above, each time the main controller 51 executes the print job, the main controller 51 generates the time series data as the data constructed of time-series values of the velocity V of the carriage 31 and/or the voltage command value U observed by the movement control of the carriage 31 during a corresponding period (in particular, the constant velocity period), as the observed data. The main controller 51 further identifies the index value Z with respect to the abnormality in the image forming system 1 and the peak observed value Y in each of the areas, each time the main controller 51 executes the print job.

The main controller 51 further determines the remaining service life of the image forming system 1, based on the changes in the index value Z over the plurality of print jobs. Specifically, the main controller 51 calculates the approximate curve with respect to the changes in index value Z, and determines, as the service life of the image forming system 1, the time TD in the future when index value Z is to reach the threshold value Z_TH in the approximate curve. Further, the main controller 51 determines, as the remaining service life of the image forming system 1, the time remaining until the time TD in the future arrives.

According to the present embodiment, with the above-mentioned method to determine the remaining service life, the time when the image forming system 1 might fail can be predicted with high accuracy, before the image forming system 1 might fail, and the user can be urged to perform the maintenance of the image forming system 1 before the image forming system 1 might fail. With this, the user can perform the maintenance of the image forming system 1 at an appropriate time before the image forming system 1 might fail, thereby reducing the occurrence and prolongation of the downtime associated with the failure.

According to the present embodiment, the main controller 51 identifies, in particular, the maximum value (i.e., peak) of the detected velocity V of the carriage 31 or of the voltage command value U in the constant velocity period, as the index value Z. This index value Z corresponds to a feature amount of the corresponding period. The maximum value of the detected velocity V corresponds to the moving velocity of the carriage at a time when the moving velocity V of the carriage 31 diverges maximally from the target velocity Vr in the constant velocity period.

The main controller 51 smooths the time series data of the index value Z in the time direction by executing the moving average process. The main controller 51 uses the smoothed index value Z to calculate the approximate curve and to determine the remaining service life. Therefore, according to the present embodiment, the influence of a minute variation in the index value Z can be reduced, the changes in the index value Z can be accurately grasped, and the remaining service life can be determined with high accuracy.

According to the present embodiment, the main controller 51 further identifies the cause of the abnormality in the image forming system 1, from the peak observed value Y in each of the areas and the temporal change in the peak observed value Y. Specifically, the main controller 51 specifies the cause of the abnormality among the power transmission device (the shaft 35), the linear encoder 40, and the tube 25 as the candidates for the cause of the abnormality, in accordance with the area in which abnormality is detected and the temporal change in the peak observed value Y. Therefore, according to the present embodiment, the cause of the abnormality in the image forming system 1 can be identified accurately and appropriately without using the frequency analysis.

In a case where the remaining service life becomes less than the set value, the main controller 51 identifies the cause of the abnormality based on the peak observed value Y in each of the areas accumulated previously, using the method described above. The main controller 51 further displays, via the user interface 90, the information urging the user to perform the maintenance in accordance with the cause of the abnormality.

Therefore, the user can properly resolve the cause of the abnormality before a failure which is presumed to occur in the future, by performing the maintenance in accordance with the display of the above-described information from the image forming system 1. As a result, the image forming system 1 is capable of effectively reducing the occurrence of downtime due to failure.

The present disclosure is not limited to the above-described embodiment, and may be implemented in various aspects. For example, in the above-described embodiment, although the maximum value of the velocity V of the carriage 31 in the constant velocity period is identified as the index value Z, the maximum value of difference δ (absolute value) between the maximum value of the velocity V and the target velocity Vr may be identified as the index value Z, rather than the maximum value.

In other words, the main controller 51 is capable of performing the smoothing process with respect to time series data as data constructed of time-series values of the difference δ, and of performing the function fitting with respect to the time series data of the difference δ after the smoothing process. The main controller 51 may determine a time at which an approximate curve obtained by the above-described function fitting reaches a threshold value as the service life of the image forming system 1, thereby determining the remaining service life of the image forming system 1. In such a manner, based on the temporal change in the observed amount (velocity V) observed by the movement control of the carriage 31 performed a plurality of times, the main controller 51 is capable of determining the service life or the remaining service life of the image forming system 1.

Similarly to the index value Z, the peak observed value Y may be identified and recorded, as a difference (absolute value) between the maximum value of the velocity V and the target velocity Vr in a corresponding area.

Other than the foregoing, in the above-described embodiment, the main controller 51 may execute the maintenance-related process so that the processes from step S270 to step S290 at a time when the index value Z becomes an alert value or more, the alert value being set to be less than the threshold value Z_TH, rather than at the time when the remaining service life becomes less than the set value. For example, the process of step S260 may be replaced with a process of determining whether the index value Z is the alert value or more.

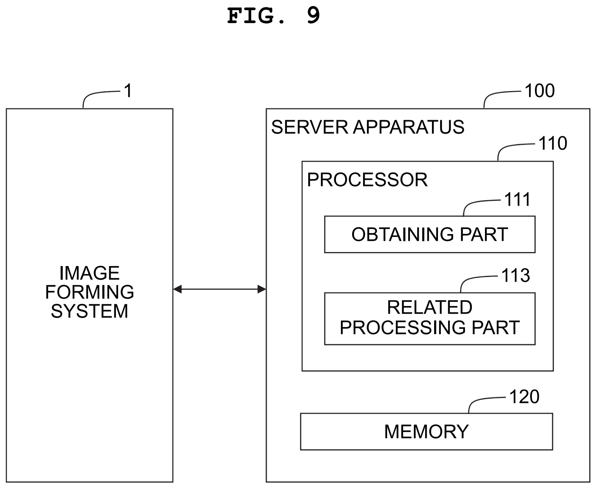

Further, a part or all of each of the job-related process and the maintenance-related process executed by the image forming system 1 may also be executed by an external server apparatus 100 (FIG. 9), rather than by the image forming system 1. For this purpose, a computer program for causing a processor 110 of the server apparatus 100 to execute a part or all of each of the job-related process and the maintenance-related process may be prepared and installed in the server apparatus 100.

The server apparatus 100 depicted in FIG. 9 is communicatively connected to the image forming system 1 via a wide area network. The server apparatus 100 includes a processor 110 and a memory 120. The processor 110 functions as an obtaining part 111 and a related processing part 113 by executing the process in accordance with a computer program stored in the memory 120.

The obtaining part 111 obtains observation data generated by the image forming system 1 in step S120 each time the image forming system 1 executes the print job, through communication with the image forming system 1. The related processing part 113 executes the process of step S140, the process of step S150 and process of step S160 of the job-related process depicted in FIG. 3, the maintenance-related process depicted in FIGs. 4A and 4B, and the cause identifying process depicted in FIG. 5. Note, however, that in step S290, the related processing part 113 transmits the information necessary for display to the image forming system 1 and causes the user interface 90 of the image forming system 1 to display corresponding information. The image forming system 1 may be configured so that the user is capable of confirming the corresponding information from a browser.

In addition, in the above-described embodiment, the main controller 51 identifies the index value Z in each print job, generates the time series data of the index value Z, and determines the remaining service life based on this time series data. Note, however, that the main controller 51 may generate the index value Z in each predetermined period, such as each day, rather than in each print job. In other words, the main controller 51 may determine, as the feature amount of the corresponding period, the peak of the velocity V of the carriage 31 or the peak of the voltage command value U in the predetermined period which is not limited to each print job, or the velocity V of the carriage 31 at the time when the velocity V of the carriage 31 diverges maximally from the target velocity Vr in the corresponding period, or difference δ of the velocity V of the carriage 31 from the target velocity Vr. The main controller 51 may determine the service life or the remaining service life of the image forming system 1 based on the temporal change in the above-described feature amount in a plurality of periods.

Further, in the above-described embodiment, the main controller 51 identifies the peak observed value Y in each of the areas based on the position of the carriage 31. Note, however, that the main controller 51 may obtain the velocity V or the voltage command value U as time series data. In a case where the carriage 31 moves in the main scanning direction, the abnormal peak of the velocity V or of the voltage command value U is observed as the peak of the velocity V or of the voltage command value U at a specific time period on a time axis with a start time of the movement control of the carriage 31 as the origin. In other words, in FIG. 7A and FIG. 7B, even in a case where the horizontal axis is the time axis, a similar waveform is observed with respect to the velocity V or the voltage command value U.

Therefore, the main controller 51 may record the peak observed value Y in each time period corresponding to a corresponding one of the areas, rather than in each of the areas (step S150). The time period referred to here may be a time period on the time axis from a first end point to a second end point in the moving route of the carriage 31, with the origin being the start time of the movement control of the carriage 31. In a case where the movement (of the carriage 31) between the first and second end points on the moving route of the carriage 31 is controlled in accordance with a constant velocity profile, each time period corresponds to a specified area in the moving route of the carriage 31. In this case, the main controller 51 is capable of identifying the cause of the abnormality using the peak observed value Y in each time period in the cause identifying process (step S280). In other words, main controller 51 is capable of identifying the cause of the abnormality based on the time period during which the abnormality in the observed amount is detected during the movement of the carriage 31.

Further, a parameter different from the above-described velocity V or the voltage command value U as the operating amount may be used with respect to the peak observed value Y and/or the index value Z. The voltage command value U corresponds to the motor torque and to the acceleration of the carriage 31. Therefore, rather than using the velocity V, the acceleration as a physical amount calculated from the velocity V may be used as the peak observed value Y and/or the index value Z so as to identify the service life and/or the cause of the abnormality. The acceleration is time derivative of the velocity V and is related to the velocity V.

In the above-described embodiment, the main controller 51 identifies the peak of each of the areas so as to identify the cause of the abnormality. However, the present disclosure is not limited to the aspect of the above-described embodiment. For example, the main controller 51 may record, in the memory 513 for each cause of the abnormality, a sample waveform in a case where a corresponding cause of the abnormality occurs, and the main controller 51 may identify the cause of the abnormality by comparing the sample waveform for each cause of the abnormality with an observed waveform which is a waveform at the observed position or of the peak observed value Y versus time. In this case, the main controller 51 is capable of identifying the cause of the abnormality from the similarity between the observed waveform and the sample waveform for each cause of the abnormality. An artificial intelligence (AI) may be used to determine the similarity.

Other than the foregoing, the main controller 51 may execute the cause identifying process at a time when a phenomenon that the peak observed value Y exceeds the threshold value Y_TH occurs, or at a time when this phenomenon continuously occurs for a predetermined period, regardless of the remaining service life. The image forming system 1 of the above-described embodiment may be applied to an ink-jet printer other than the garment printer.

In the above-described embodiment, as depicted in FIG. 5, the main controller 51 identifies the area, in which the peak observed value Y exceeds the threshold value Y_TH, as the area in which the abnormality in the observed amount is detected (step S281). The main controller 51 identifies the cause of the abnormality based on the area in which the abnormality in the observed amount is detected and the change in the peak observed value in this area (step S282 to step S287).

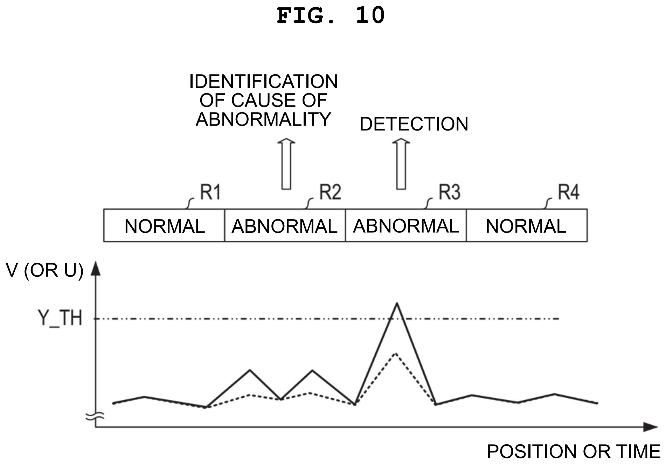

However, depending on the kind of the cause of the abnormality, the abnormality in the observed value may also be found in a related area in some cases, as depicted in FIG. 10. Therefore, the main controller 51 may identify a certain area in which the peak observed value Y exceeds the threshold value Y_TH and a related area related to the certain area, as areas in each of which the abnormality in the observed amount is detected, thereby identifying the cause of the abnormality.

The above-described related area may be previously defined as an area in which a change in an observed amount (the velocity V or the voltage command value U) due to the same cause of the abnormality can be observed, even if the peak observed value Y does not exceed the threshold value Y_TH.

Without limiting the present disclosure in any way and sense, the related area may be defined as an area adjacent to the area in which the peak observed value Y exceeds the threshold value Y_TH. In this case, the main controller 51 identifies a wide area including the area in which the peak observed value Y exceeds the threshold value Y_TH, as the area in which the abnormality in the observed amount is detected. The main controller 51 is capable of identifying the cause of the abnormality, based on an observed amount (the velocity V or the voltage command value U) in the adjacent area which is adjacent to the area in which the peak observed value Y exceeds the threshold value Y_TH.

According to the example depicted in FIG. 10, among a plurality of areas R1, R2, R3, and R4, the peak of the observed amount exceeding the threshold value Y_TH occurs in the area R3. A waveform depicted in FIG. 10 indicates a change in the observed amount with respect to the position (of the carriage 31) (or the time). In FIG. 10, a broken line indicates a waveform before the abnormality is detected, and a solid lines indicates a waveform after the abnormality has been detected. In FIG. 10, the change from the waveform indicated by the broken line to the waveform indicated by the solid line can be understood as occurring due to the abnormality in the image forming system 1.

As appreciated from the change of the waveform, according to the example indicated in FIG. 10, the change in the observed amount is also observed in the area R2 which is adjacent to the area R3. In a case where the peak observed value Y exceeds the threshold value Y_TH in the area R3, the main controller 51 is capable of identifying a wide area including the area R3 and the area R2 adjacent to the area R3 (areas R2 and R3) (or a wide area including the area R3 and the area R2 and the area R4 each adjacent to the area R3 (areas R2, R3, R4), as the area in which the abnormality in the observed value is detected, and is capable of identifying the cause of the abnormality based the change in the observed value in the adjacent area R2 (or the change in the observed value in each of the adjacent areas R2 and R4).

A function of one constituent component in the above-described embodiment may be distributed in a plurality of constituent components. Functions of a plurality of constituent components in the above-described embodiment may be integrated into one constituent component. A part of the configuration of the above-described embodiment may be omitted. At least a part of the configuration of the above-described embodiment may be added to or replaced by another configuration of the above-described embodiment. Every aspect encompassed by the technical concept identified from the wording of the claims is an embodiment of the present disclosure.

The present specification can be appreciated as disclosing the following technical concepts.
(Item 1) An image forming system including:
   a recording head configured to eject ink onto a medium;
   a carriage moving mechanism including: a carriage having the recording head mounted on the carriage, a motor, and a power transmission device which converts rotational motion of the motor into translational motion of the carriage so as to move the carriage in a main scanning direction;
   a motor driver configured to drive the motor;
   an encoder configured to output an encoder signal in accordance with a positional change in the main scanning direction of the carriage; and
   a controller configured to perform movement control of the carriage by inputting, to the motor driver, an operating amount for moving the carriage at a target velocity in the main scanning direction, based on a moving velocity of the carriage detected from the encoder signal, wherein:
      the motor driver is configured to apply a driving power based on the operating amount to the motor so as to drive the motor; and
      the controller is configured to detect an abnormality in the moving velocity, a physical amount related to the moving velocity, or the operating amount, each of the moving velocity, the physical amount and the operating amount being an observed amount observed by the movement control of the carriage, and to identify a cause of the abnormality based on an area, in a moving route of the carriage, in which the abnormality in the observed amount is detected, or based on a time period during which the abnormality in the observed amount is detected during movement of the carriage.
**(Item 2)** The image forming system according to Item 1, wherein the controller is configured to identify the cause of the abnormality based not only on the area in which the abnormality in the observed amount is detected or the time period during which the abnormality in the observed amount is detected, but also on a temporal change in the observed amount observed by the movement control performed a plurality of times until the abnormality in the observed amount is detected.
**(Item 3)** The image forming system according to Item 2, wherein the controller is configured to identify the cause of the abnormality based on whether the temporal change in the observed amount is equal to or greater than a reference.
**(Item 4)** The image forming system according to any one of Items 1 to 3, wherein the controller is configured to determine service life or remaining service life of the image forming system based on a temporal change in the observed amount observed by the movement control performed the plurality of times, and to identify the cause of the abnormality under a condition that a remaining time until the service life or the remaining service life is less than a threshold value.
**(Item 5)** The image forming system according to Item 4, wherein with respect to a plurality of periods, the controller is configured to identify, in each of the plurality of periods, a peak of the operation amount in a corresponding period of the plurality of periods, or either the moving velocity of the carriage at a time at which the moving velocity of the carriage diverges maximally from the target velocity in the corresponding period, or a difference between the moving velocity of the carriage and the target velocity in the corresponding period, as a feature amount of the corresponding period, and to determine the service life or the remaining service life of the image forming system, based on a temporal change in the feature amount in the plurality of periods.
**(Item 6)** The image forming system according to any one of Items 1 to 5, wherein the controller is configured to detect a peak of the operating amount, a peak of the moving velocity, or a peak of difference between the moving velocity and the target velocity, each of the peaks having a magnitude equal to or greater than a reference, as the abnormality in the observed amount; and the controller is configured to identify an area, in the moving route of the carriage, in which any one of the peaks having the magnitude equal to or greater than the reference is observed, as the area in which the abnormality in the observed amount is detected.
**(Item 7)** The image forming system according to Item 2, wherein the recording head is connected to an ink tank via a tube;
   candidates for the cause include the tube, the encoder, and the power transmission device; and
   the controller is configured to identify the cause of the abnormality from among the candidates, in accordance with the area and the temporal change.
**(Item 8)** An identifying method for identifying a cause of an abnormality in an image forming system, the image forming system including:
   a recording head configured to eject ink onto a medium;
   a carriage moving mechanism including: a carriage having the recording head mounted on the carriage, a motor, and a power transmission device which converts rotational motion of the motor into translational motion of the carriage so as to move the carriage in a main scanning direction;
   a motor driver configured to drive the motor;
   an encoder configured to output an encoder signal in accordance with a positional change in the main scanning direction of the carriage; and
   a controller configured to perform movement control of the carriage by inputting, to the motor driver, an operating amount for moving the carriage at a target velocity in the main scanning direction, based on a moving velocity of the carriage detected from the encoder signal,
   the motor driver being configured to apply a driving power based on the operating amount to the motor so as to drive the motor,
   the identifying method including:
      causing the controller to detect an abnormality in the moving velocity, a physical amount related to the moving velocity, or the operating amount, each of the moving velocity, the physical amount and the operating amount being an observed amount observed by the movement control of the carriage; and
      identifying the cause of the abnormality based on an area, in a moving route of the carriage, in which the abnormality in the observed amount is detected, or based on a time period during which the abnormality in the observed amount is detected during movement of the carriage.
**(Item 9)** The identifying method of Item 8, wherein the identifying the cause of the abnormality includes identifying the cause of the abnormality based not only on the area in which the abnormality in the observed amount is detected or the time period during which the abnormality in the observed amount is detected, but also on a temporal change in the observed amount observed by the movement control performed a plurality of times until the abnormality in the observed amount is detected.
**(Item 10)** The identifying method of Item 9, wherein the identifying the cause of the abnormality includes identifying the cause of the abnormality based on whether the temporal change in the observed amount is equal to or greater than a reference.
**(Item 11)** A computer program causing a computer to execute the identifying method as defined in any one of Items 8 to 10.
**(Item 12)** A computer-readable storage medium capable of storing the computer program as defined in Item 11.

### Reference Signs List:.

1: image forming system, 20: recording head, 21: ink tank, 25: ink supply tube, 30: carriage moving mechanism, 31: carriage, 311: roller, 33: belt mechanism, 35: shaft, 37: guide rail, 39: CR motor, 40: linear encoder, 50: controller, 51: main controller, 511: processor, 513: memory, 53: motor controller, 60: signal processing circuit, 70: motor driver, 90: user interface, 95: communication interface, 100: server apparatus, 110: processor, 111: obtaining part, 113: related processing part, 120: memory

## Claims

1. An image forming system comprising:
a head configured to eject ink onto a medium;
a carriage moving mechanism including: a carriage mounting the head and configured to move in a main scanning direction, a motor, and a power transmission device configured to convert rotational motion of the motor into translational motion of the carriage so as to move the carriage in the main scanning direction;
a motor driver configured to drive the motor;
an encoder configured to output an encoder signal in accordance with a positional change in the main scanning direction of the carriage; and
a controller for performing movement control of the carriage by inputting, to the motor driver, an operating amount for moving the carriage at a target velocity in the main scanning direction, based on a moving velocity of the carriage detected from the encoder signal, wherein:
the motor driver is configured to apply a driving power based on the operating amount to the motor so as to drive the motor, and
the controller is configured to detect an abnormality in the moving velocity, a physical amount related to the moving velocity, or the operating amount, each of the moving velocity, the physical amount and the operating amount being an observed amount observed by the movement control of the carriage, and to identify a cause of the abnormality based on an area, in a moving route of the carriage, in which the abnormality in the observed amount is detected, or based on a time period during which the abnormality in the observed amount is detected during movement of the carriage.

2. The image forming system according to claim 1, wherein the controller is configured to identify the cause of the abnormality based not only on the area in which the abnormality in the observed amount is detected or the time period during which the abnormality in the observed amount is detected, but also on a temporal change in the observed amount observed by the movement control performed a plurality of times until the abnormality in the observed amount is detected.

3. The image forming system according to claim 2, wherein the controller is configured to identify the cause of the abnormality based on whether the temporal change in the observed amount is equal to or greater than a reference.

4. The image forming system according to claims 2 or 3, wherein the head is connected to an ink tank via a tube;
candidates for the cause include the tube, the encoder, and the power transmission device; and
the controller is configured to identify the cause of the abnormality from among the candidates, in accordance with the area and the temporal change.

5. The image forming system according to any of claims 1 to 4, wherein the controller is configured to determine service life or remaining service life of the image forming system based on a temporal change in the observed amount observed by the movement control performed the plurality of times, and to identify the cause of the abnormality under a condition that a remaining time until the service life or the remaining service life is less than a threshold value.

6. The image forming system according to claim 5, wherein with respect to a plurality of periods, the controller is configured to identify, in each of the plurality of periods, a peak of the operation amount in a corresponding period of the plurality of periods, or either the moving velocity of the carriage at a time at which the moving velocity of the carriage diverges maximally from the target velocity in the corresponding period, or a difference between the moving velocity of the carriage and the target velocity in the corresponding period, as a feature amount of the corresponding period, and to determine the service life or the remaining service life of the image forming system, based on a temporal change in the feature amount in the plurality of periods.

7. The image forming system according to any one of claims 1 to 6, wherein the controller is configured to detect a peak of the operating amount, a peak of the moving velocity, or a peak of difference between the moving velocity and the target velocity, each of the peaks having a magnitude equal to or greater than a reference, as the abnormality in the observed amount; and
the controller is configured to identify an area, in the moving route of the carriage, in which any one of the peaks having the magnitude equal to or greater than the reference is observed, as the area in which the abnormality in the observed amount is detected.
